# DEMANDE DE BREVET EUROPEEN

(11) **EP 3 144 588 A1**
(43) Date de publication de la demande: **22.03.2017**
(21) Numéro de dépôt: 16189055.3
(22) Date de dépôt: 15.09.2016
(51) Int. Cl.: F21V 8/00

(54) **DISPOSITIF LUMINEUX, NOTAMMENT POUR VÉHICULE AUTOMOBILE**

(30) Priorité: 15.09.2015 FR 1501910
(71) Demandeur: VALEO VISION, 93012 Bobigny Cedex (FR)
(72) Inventeur: ALBOU, Pierre, 75013 PARIS (FR)

(57) **Abrégé**

Dispositif lumineux, notamment pour véhicule automobile, comprenant :
- au moins un module optique,
- un guide de lumière (2) comportant au moins une face d'entrée destinée à coopérer avec une source lumineuse (1), et au moins une face de sortie apte à coopérer avec le module optique, pour conduire au moins une partie des rayons lumineux émis par la source lumineuse (1) vers le module optique, ledit module optique comprenant un élément homogénéisant (3) destiné à être traversé par les rayons lumineux issus de la sortie du guide de lumière (2) afin d'obtenir un faisceau homogène d'éclairage et/ou de signalisation.

## Description

L'invention concerne un module lumineux et un dispositif lumineux, tel un projecteur, comprenant un module lumineux selon l'invention, notamment pour véhicule automobile.

Il est connu des projecteurs de véhicules automobiles utilisant des sources de lumière, notamment des diodes électroluminescentes, qui sont agencées directement dans le projecteur ou à proximité immédiate de celui-ci. Afin de dissiper la chaleur dégagée par les diodes électroluminescentes, sont utilisés des dispositifs de refroidissement. Cependant, ces dispositifs de refroidissement sont encombrants et offrent peu de liberté quant à leur positionnement puisqu'ils doivent être agencés au voisinage des sources de lumière qu'ils refroidissent. D'autre part la chaleur dégagée par les sources lumineuses impose l'utilisation de certains matériaux.

L'un des objets de l'invention est de résoudre ces inconvénients. Pour ce faire, l'invention propose un dispositif lumineux, notamment pour véhicule automobile, comprenant :
- au moins un module optique,
- un guide de lumière comportant au moins une face d'entrée destinée à coopérer avec une source lumineuse, et au moins une face de sortie apte à coopérer avec le module optique, pour conduire au moins une partie des rayons lumineux émis par la source lumineuse vers le module optique, ledit module optique comprenant un élément homogénéisant destiné à être traversé par les rayons lumineux issus de la sortie du guide de lumière afin d'obtenir un faisceau homogène d'éclairage et/ou de signalisation.

On entend par guide de lumière une pièce optique agencée de manière à permettre la propagation de la lumière par réflexion(s) interne(s) totale(s) depuis une face d'entrée jusqu'à une face de sortie.

Dès lors, l'utilisation de guides de lumière permet de positionner librement la source de lumière et donc le dispositif de refroidissement relativement au projecteur, la lumière pouvant être ensuite acheminée en un point choisi de celui-ci à l'aide des guides de lumière. De plus, des matériaux jusque là inutilisables dans le dispositif peuvent être envisagés. En outre, alors que les guides de lumière peuvent offrir des zones discontinues d'émission de lumière, l'élément homogénéisant permet d'obtenir un signal lumineux plus homogène en sortie du dispositif.

Selon différents aspects de l'invention, qui pourront être pris ensemble ou séparément :
- le guide de lumière comprend une pluralité de fibres optiques,
les fibres optiques sont des guides de lumière souples et fins, la lumière s'y propage dans un coeur entouré d'une gaine. Ce coeur peut présenter par exemple un diamètre inférieur à 1mm, notamment inférieur à 0,1mm.
- le guide de lumière comprend au moins un toron de fibres optiques,
- l'élément homogénéisant comprend une plaque,
- la plaque comprend une surface d'entrée et une surface de sortie,
- la face de sortie du guide de lumière émet des rayons lumineux sous forme de cônes de lumière, la surface de sortie de la plaque étant agencée à proximité d'un plan d'intersection desdits cônes de lumière,
- la face de sortie du guide de lumière est agencée de manière sensiblement perpendiculaire à la surface d'entrée de la plaque,
- la face de sortie du guide de lumière comprend des extrémités de sortie, lesdites extrémités de sortie étant disposées de manière à être sensiblement confondues avec un même plan, dit plan d'émission,
- ladite plaque comprend au moins un canal connectant la surface d'entrée à la surface de sortie,
- le canal comprend au moins une surface réfléchissante de manière à réfléchir les rayons lumineux sortant de la face de sortie du guide de lumière,
- le canal est délimité par sa surface réfléchissante,
- la face de sortie du guide de lumière étant disposée de manière à être sensiblement confondue avec un même plan, dit plan d'émission,
- les extrémités de sortie du guide de lumière ont été polies de manière à former ledit plan d'émission,
- la face de sortie du guide de lumière a été polie de manière à former ledit plan d'émission,
- la face de sortie du guide de lumière débouche sur le canal,
- les extrémités de sortie du guide de lumière débouchent sur le canal,
- la face de sortie du guide de lumière présente une section s'ajustant, en projection, dans ledit canal,
- les extrémités de sortie du guide de lumière forment un faisceau dont la section s'ajuste, en projection, dans ledit canal,
- le dispositif lumineux comprend en outre un élément de maintien, ledit élément de maintien étant conçu pour maintenir le guide de lumière relativement audit élément homogénéisant,
- l'élément de maintien comprend une plaque de maintien (40),
- l'élément de maintien comprend au moins un canal conçu pour accueillir le guide de lumière,
- le dispositif lumineux comprend au moins une source lumineuse,
- la source lumineuse comprend au moins un élément émetteur à semi-conducteur,
- la source lumineuse comprend une diode électroluminescente,
- la source lumineuse comprend au moins une diode laser,
- la face d'entrée du guide de lumière est en regard de la source lumineuse,
- le guide de lumière comprend au moins un toron de fibres optiques,
- ledit dispositif lumineux comprenant un boitier fermé par une glace, la source lumineuse est logée dans ledit boitier,
- ledit dispositif lumineux comprend un boitier fermé par une glace, la source lumineuse est située à l'extérieur dudit boitier.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés :
- La figure 1 est une représentation schématique en vue de côté du dispositif d'émission selon l'invention.
- La figure 2 est une représentation schématique en vue de côté d'une partie simplifiée du dispositif d'émission illustré à la figure1.
- La figure 3 est une représentation schématique en vue de face d'après la figure 2, au niveau d'une sortie de la lumière.

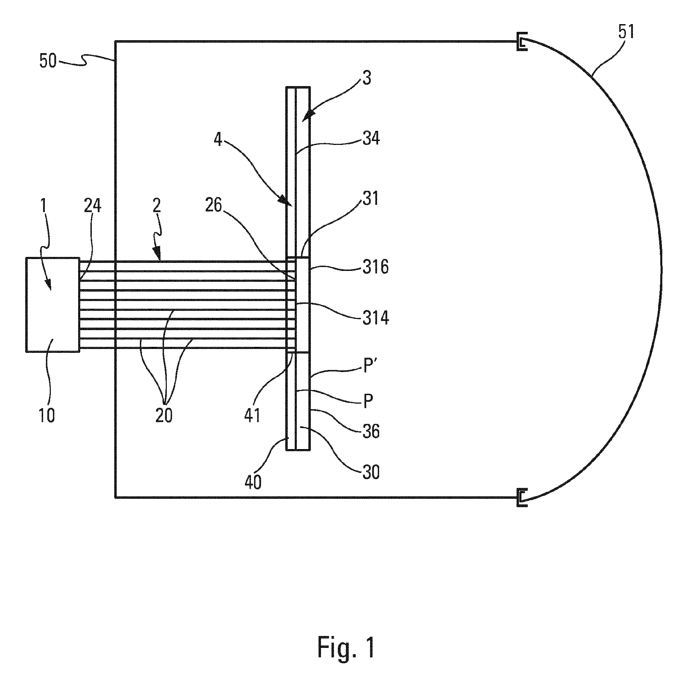

Comme illustré à la figure 1, l'invention concerne un dispositif lumineux de lumière, notamment pour véhicule automobile. Ledit dispositif lumineux comprend ici un boîtier 50 fermé par une glace 51 et dans lequel est logé un module optique et au moins un guide de lumière 2. Ledit module optique comprend, lui, un élément homogénéisant 3.

Ledit module optique comprend en outre au moins un élément de déviation optique. Ledit élément de déviation optique peut être un réflecteur et/ou une lentille, ledit réflecteur étant par exemple sensiblement parabolique ou elliptique.

Le dispositif lumineux pourra également comprendre une source lumineuse 1 disposée à l'extérieur de l'enceinte définie par le boîtier 50 et la glace 51. Alternativement, la source lumineuse 1 pourrait être disposée dans l'enceinte définie par le boîtier 50 et la glace 51 sans que cela sorte du contexte de l'invention. De plus, on note qu'ici le guide de lumière 2 du dispositif lumineux comprend une pluralité de fibre optique 20.

Le dispositif lumineux est conçu de sorte que la lumière puisse se propager de la source lumineuse 1 à l'élément homogénéisant 3 en passant par le guide de lumière 2. On note que le dispositif conforme à l'invention génère un flux lumineux présentant successivement des formes différentes qui seront décrites par la suite.

Ladite source lumineuse 1 comprend par exemple une puce à semi-conducteur émettrice de lumière, notamment une diode électroluminescente 10. La source lumineuse pourra également comprendre une diode laser.

Avantageusement, ladite diode 10 émet un flux lumineux de manière diffuse, c'est-à-dire sur une plage angulaire large, ledit flux lumineux étant composé de rayons lumineux. La lumière émise par la diode électroluminescente 10 est ici spatialement homogène. Autrement dit, le flux lumineux émis par la source lumineuse 1 de lumière, est sensiblement le même en tout point dans le secteur angulaire considérée.

Le guide de lumière 2est conçu pour acheminer au moins une partie desdits rayons lumineux entre la source lumineuse 1 et l'le module optique. En particulier, le guide de lumière est conçu pour acheminer au moins une partie desdits rayons lumineux entre la source lumineuse 1 et l'élément homogénéisant 3.

Ledit élément homogénéisant 3 est destiné à être traversé par les rayons lumineux issus de la face de sortie du guide de lumière 2 afin d'obtenir un faisceau homogène d'éclairage et/ou de signalisation. On note que ledit faisceau d'éclairage et/ou de signalisation est de préférence un faisceau réglementaire. Autrement dit, ledit faisceau d'éclairage et/ou de signalisation respecte ici une grille photométrique selon la réglementation en vigueur dans le pays considéré.

Avantageusement, les guides de lumière 2 comprennent des fibres optiques 20. Lesdites fibres optiques 20 comprennent chacune une extrémité d'entrée 24 et une extrémité de sortie 26 et s'étendent longitudinalement selon une direction principale d'extension, rectiligne ou non, entre ladite extrémité d'entrée 24 et ladite extrémité de sortie 26. L'extrémité d'entrée 24 de chaque fibre optique 20 est agencée ici au niveau de la source lumineuse 1.

Le guide de lumière 2 comprend une face d'entrée, dans le cas des fibres optiques la face d'entrée correspondant à l'ensemble des extrémités d'entrée 24,, et une face de sortie, dans le cas des fibres optiques la face d'entrée correspondant à l'ensemble des extrémités de sortie 26. Ladite face d'entrée est destinée à coopérer avec ladite source lumineuse 1. En particulier, ladite face d'entrée du guide lumière est positionnée en regard de la source lumineuse. Ladite face de sortie, elle, est conçue pour coopérer avec le module optique.

On note que la face d'entrée du guide de lumière 2 est par exemple sensiblement perpendiculaire à la direction principale d'extension dudit guide de lumière 2. Similairement, la face de sortie de du guide de lumière 2 est par exemple sensiblement perpendiculaire à la direction principale d'extension dudit guide de lumière 2.

Avantageusement, l'extrémité d'entrée 24 de la fibre optique 20 pourra se trouver au niveau ou à proximité immédiate de la source lumineuse 1. L'extrémité de sortie 26 est, elle, agencée au niveau de l'élément homogénéisant 3. On note que les extrémités de sortie 26 des fibres optiques 20 correspondent à une sortie desdites fibres optiques 20.

Les extrémités d'entrée 24 des fibres optiques 20 sont configurées de sorte que les rayons lumineux issus de la source lumineuse 1 ou tout du moins une partie de ceux-ci pénètrent à l'intérieur desdites fibres optiques 20. A l'intérieur desdites fibres optiques 20, les rayons lumineux se propagent alors, notamment, par réflexion interne, voire par réflexion interne totale.

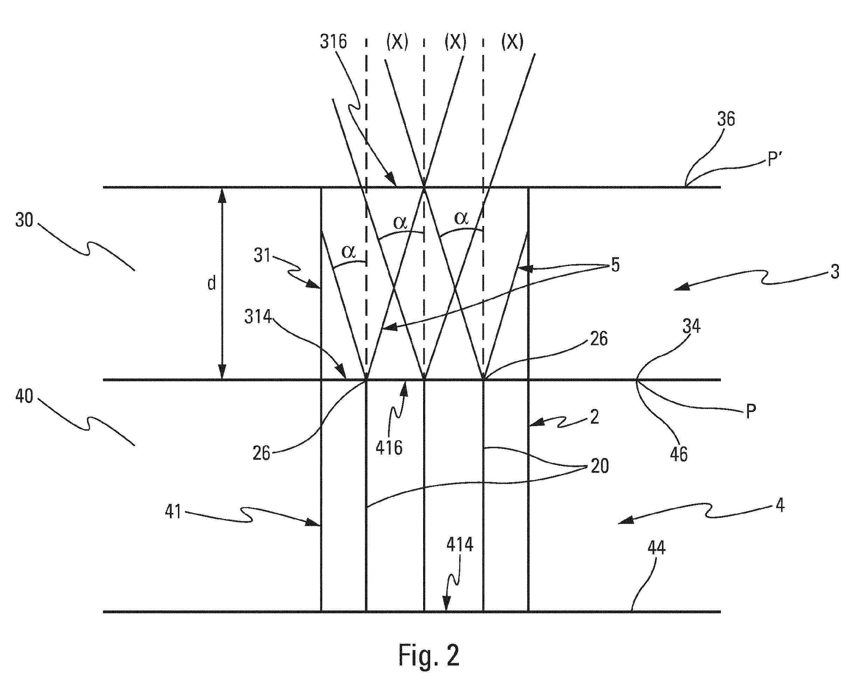

Comme illustré à la figure 2, les fibres optiques 20 sont ici agencées en au moins un faisceau de fibres optiques 20, ici un faisceau de fibres optiques 20. On entend par « faisceau de fibres optiques 20 », un ensemble de fibres optiques 20 liées entre elles dans le sens de leur longueur. Ledit faisceau de fibres optiques 20 comprend ici quatre fibres optiques 20. Il pourra en être autrement. Au sein dudit faisceau de fibres, les fibres optiques 20 sont agencées sensiblement parallèlement les unes aux autres. Elles sont en outre agencées côte à côte et de manière contigüe les unes aux autres.

On note que les fibres optiques 20 pourront être agencées en toron de fibres optiques. Autrement dit, les fibres optiques 20 pourront être tordues ou torsadées ensemble de manière à former un cordage de fibres optiques 20.

L'agencement desdites fibres optiques 20 est avantageusement prévu de manière à limiter d'éventuels espaces vides et/ou des zones non-propagatrices de lumière entre les fibres optiques 20 d'un même faisceau. Par ailleurs, afin de faciliter leur manipulation et/ou leur installation, les fibres optiques 20 d'un même faisceau pourront par exemple être solidarisées les unes aux autres en fondant les gaines par exemple.

Les fibres optiques 20 forment à leur sortie une pluralité de zones émettrices de lumière discontinues. Autrement dit, en sortie desdites fibres optiques 20, le dispositif comprend à la fois des zones émettrices de lumière et d'autres zones 29, celles-ci non émettrices de lumière. Ici, lesdites zones non-émettrices 29 de lumière correspondent, entre autres, à des espaces entre les fibres optiques 20 adjacentes et/ou à des parties de fibres optiques 20 non émettrices de lumière comme, par exemple, des gaines de protection dans lesquelles ne se propage pas la lumière.

Comme illustré en particulier à la figure 2, les rayons lumineux, lorsqu'ils sont issus des extrémités de sortie 26 des fibres optiques 20, se présentent sensiblement sous la forme de cônes de révolution, dit cônes lumineux 5.. En dehors desdits cônes lumineux 5, la lumière issue des fibres optiques 20 ne se propage pas ou peu. Ces cônes lumineux 5 peuvent être caractérisés géométriquement par un axe optique X parallèle à une direction principale de propagation des rayons lumineux au niveau des extrémités de sortie 26 des fibres optiques 20 et par un angle d'ouverture α proportionnel à une ouverture numérique des fibres optiques 20. On note également qu'une plage angulaire des rayons lumineux, égal au double de l'angle d'ouverture α, à la sortie des fibres optiques 20, c'est-à-dire en aval de celles-ci, est ici plus faible que la plage angulaire des rayons lumineux à la sortie de la source lumineuse 1.

Ici, les fibres optiques 20 d'un même faisceau sont agencées de sorte que leurs extrémités de sortie 26 sont sensiblement disposées dans un même plan, dit plan d'émission P. Autrement dit, les extrémités de sortie 26 des fibres optiques 20 sont sensiblement comprises dans ledit plan d'émission P.

De plus, au voisinage dudit plan d'émission P, les fibres optiques 20 s'étendent avantageusement de manière sensiblement orthogonale audit plan d'émission P. En d'autres termes, au niveau de leurs extrémités de sortie 26, les directions principales d'extension des fibres optiques 20 appartenant à un même faisceau sont toutes parallèles les unes aux autres et perpendiculaires au plan d'émission P. Autrement dit, les fibres optiques 20 sont agencées de sorte que la direction principale de propagation des rayons lumineux soit, à la sortie des fibres optiques 20, orthogonale au plan d'émission P.

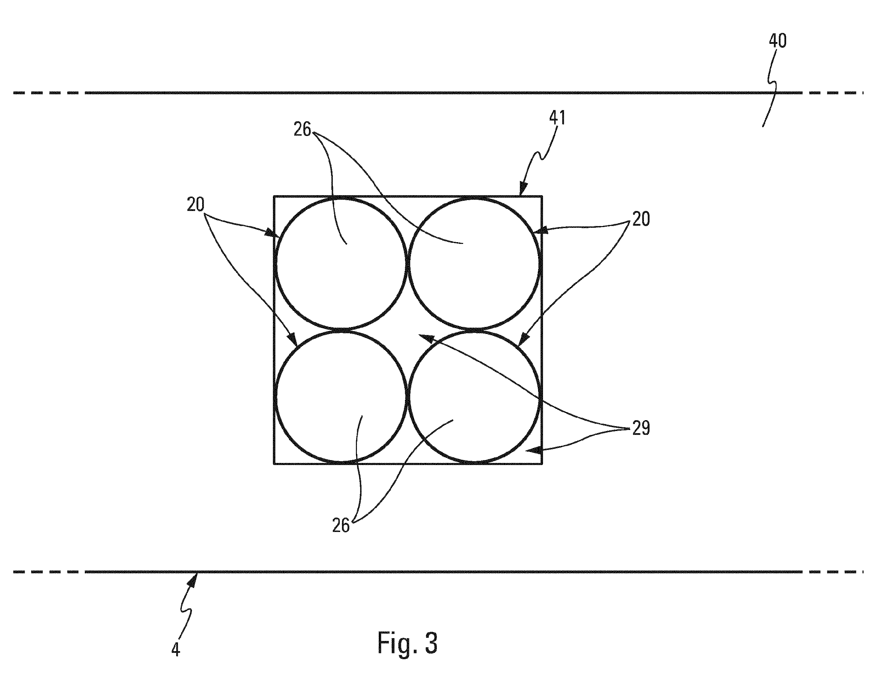

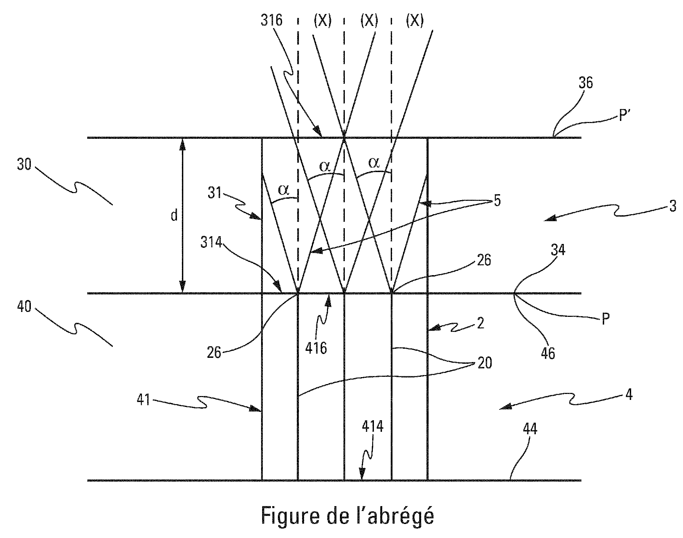

On note que, comme cela est visible à la figure 3, le plan d'émission P comprend les zones émettrices de lumière, correspondant à au moins une partie de l'extrémité de sortie 26 des fibres optiques 20, et lesdites zones non émettrices 29 de lumière.

Il est à noter également qu'étant donné l'agencement des fibres optiques 20, l'axe optique X de chaque cône lumineux 5 est perpendiculaire au plan d'émission P. Lesdits axes optiques X sont en outre parallèles à la direction principale d'extension des fibres optiques 20 au niveau de leurs extrémités de sortie 26.

L'élément homogénéisant 3 est avantageusement placé au niveau ou à proximité de la face de sortie de du guide de lumière, et dans le cas où le guide de lumière comprend une pluralité de fibres optiques, l'élément homogénéisant sera placé au niveau ou à proximité des extrémités de sortie 26 des fibres optiques 20. Il est conçu et agencé de manière à permettre l'obtention d'un éclairage dépourvu des zones non émettrices de lumière en sortie dudit élément homogénéisant 3. A cet effet, l'élément homogénéisant 3 pourra comprendre une plaque 30 conçue pour être traversée par les rayons lumineux issus du guide de lumière 2. Ladite plaque 30 comprend ici une surface d'entrée 34 et une surface de sortie 36, lesdites surfaces d'entrée 34 et de sortie 36 étant parallèles l'une à l'autre. Ladite plaque 30 est ici agencée parallèlement audit plan d'émission P. En particulier, ladite surface d'entrée 34 est ici agencée au niveau du plan d'émission P précédemment décrit, notamment au contact et/ou à proximité immédiate de celui-ci. On note que ladite plaque 30 présente une épaisseur, ladite épaisseur étant mesurée comme la distance séparant ladite surface d'entrée 34 de ladite surface de sortie 36.

On note que ladite plaque 30 est par exemple une plaque métallique. Alternativement, ladite plaque 30 peut être issue d'un matériau plastique opaque ou opacifiée.

Ladite plaque 30 comprend ici au moins un canal 31, ici un canal 31. Ledit canal 31 est conçu de manière à être traversé par les rayons lumineux issus d'un même faisceau de fibres optiques 20. Avantageusement, la plaque 30 comprend autant de canaux 31 que le dispositif lumineux comprend de faisceaux de fibres optiques 20, voire de sources émettrices de lumière 1.

Ledit canal 31 est conçu de manière à traverser ladite plaque 30. En d'autres termes, ledit canal 31 s'étend entre ladite surface d'entrée 34 et ladite surface de sortie 36 de la plaque 30, de manière orthogonale auxdites surfaces 34 et 36. Ledit canal 31 comprend un orifice d'entrée 314 confondu avec la surface d'entrée 34 et un orifice de sortie 316 confondu avec la surface de sortie 36. Autrement dit, le canal 31 connecte la surface d'entrée 34 à la surface de sortie 36.

Ledit canal 31 comprend une surface réfléchissante. Ladite surface réfléchissante correspond ici à une paroi intérieure du canal 31, ladite paroi s'étendant entre ledit orifice d'entrée 314 et ledit orifice de sortie 316. En d'autres termes, ledit canal 31 est délimité par sa surface réfléchissante.

Ladite surface réfléchissante est conçue de manière à réfléchir les rayons lumineux sortant de la face de sortie des guides de lumière 2.

Ici, la plaque 30 de l'élément homogénéisant 3 est agencée relativement aux fibres optiques 20 de sorte que les extrémités de sortie 26 des fibres optiques 20 débouchent au niveau de l'orifice d'entrée 314 du canal 31. Autrement dit, ledit élément homogénéisant 3 est agencé de sorte que la face de sortie du guide de lumière 2 débouche sur le canal 31.

On note que la face de sortie du guides de lumière 2 est agencée de manière sensiblement parallèle à la surface d'entrée 34 de la plaque 30.

Ledit canal 31 présente une section transversale, ladite section transversale étant parallèle aux surfaces d'entrée 34 et de sortie 36. Elle est, par exemple, de forme rectangulaire ou carrée, ici carrée. Alternativement, ladite section transversale pourra présenter une forme différente, par exemple circulaire. Ici, le canal 31 présente au niveau de son orifice d'entrée 314 une section transversale semblable dans sa forme et ses dimensions à une section transversale du faisceau de fibres optiques 20 au niveau des extrémités de sortie 26 desdites fibres optiques 20. Avantageusement, l'orifice d'entrée 314 présente ainsi une forme qui permet aux rayons lumineux issus des fibres optiques 20 de pénétrer intégralement à l'intérieur du canal 31.

On note en outre que la section transversale du canal 31 peut présenter des variations de formes et/ou de dimensions entre les orifices d'entrée 314 et de sortie 316. Par exemple, la section transversale du canal 31 pourra présenter des dimensions qui diminuent à mesure que l'on se déplace de l'orifice d'entrée 314 vers l'orifice de sortie 316.

Avantageusement, la surface de sortie 36 de ladite plaque 30 est agencée sensiblement à une distance d du plan d'émission P. Ladite distance d correspond à une distance mesurée entre le plan d'émission P et un plan, dit plan d'intersection P'. Ledit plan d'intersection P' est ici un plan dans lequel les cônes lumineux 5 dont les sommets sont les plus espacés l'un de l'autre au niveau du plan d'émission P se croisent, lesdits cônes lumineux 5 étant issus des extrémités de sortie 26 de fibres optiques 20.

Ce choix de positionnement de la surface de sortie 36 à la distance d permet d'obtenir en sortie de l'élément homogénéisant 3 un flux lumineux dont l'aspect de la zone émettrice est plus homogène qu'il ne l'était en sortie du guide de lumière 2. Pour une pluralité de fibres optiques, l'élément homogénéisant 3 permet d'estomper les discontinuités spatiales dues notamment à l'agencement des fibres optiques 20. Autrement dit encore, l'élément homogénéisant 3 est conçu de sorte qu'en sortie de celui-ci soit formé un éclairage dépourvu de zones non-émettrices de lumière.

Dans le cas où la surface d'entrée 34 de la plaque 30 est agencée en contact avec le plan d'émission P, l'épaisseur de la plaque 30 est avantageusement égale ou sensiblement égale à la distance d.

La plaque 30 de l'élément homogénéisant 3 est conçue de manière à ne permettre le passage des rayons lumineux qu'à travers le canal 31. A cet effet, la plaque 30 de l'élément homogénéisant 3 est avantageusement soit issue d'un matériau opaque soit recouverte d'une couche opacifiante laissant libre le canal 31.

En choisissant la forme et/ou la dimension du canal 31 et/ou de l'orifice de sortie 316, l'élément homogénéisant 3 pourra également être conçu de manière à modifier les contours et/ou la forme générale du flux lumineux composé des rayons lumineux issus de la sortie des fibres optiques 20. En particulier, la plaque 30 de l'élément homogénéisant 3 pourra permettre d'obtenir que le flux lumineux présente, en sortie de l'élément homogénéisant 3, des contours rectilignes et/ou une section transversale dont la forme générale a été modifiée. Autrement dit, la forme de l'orifice de sortie 316 pourra permettre de former à la sortie de l'élément homogénéisant 3 un éclairage dépourvu d'irrégularités au niveau de ses contours.

Avantageusement, le dispositif lumineux comprend en outre un élément de maintien 4. Ledit élément de maintien 4 est configuré pour permettre et/ou faciliter un maintien en position des fibres optiques 20 vis-à-vis de l'élément homogénéisant 3. Plus précisément, l'élément de maintien 4 est configuré pour permettre de maintenir affleurantes les extrémités de sortie 26 des fibres optiques 20 vis-à-vis du canal 31.

Ledit élément de maintien 4 comprend par exemple une plaque de maintien 40. Ladite plaque de maintien 40 est ici plane. Elle est par exemple de contour similaire à la plaque 30 de l'élément homogénéisant 3. On note cependant que ladite plaque de maintien 40 et la plaque 30 de l'élément homogénéisant 3 ne présentent pas nécessairement une épaisseur identique.

Ladite plaque de maintien 40 est avantageusement agencée de manière adjacente à la plaque 30 de l'élément homogénéisant 3, notamment en contact avec et parallèlement à celle-ci. En particulier, la plaque de maintien 40 est conçue pour être disposée au niveau des extrémités de sortie 26 des fibres optiques 20. Ladite plaque de maintien 40 comprend ici une surface d'entrée 44 et une surface de sortie 46. Ladite surface de sortie 46 est avantageusement disposée en vis-à-vis de la surface d'entrée 34 de la plaque 30 de l'élément homogénéisant 3. Dans le mode de réalisation ici décrit, la plaque de maintien 40 est agencée de sorte que la surface de sortie 46 de la plaque de maintien 40 et la surface d'entrée 34 de la plaque 30 de l'élément homogénéisant 3 soient en contact l'une avec l'autre.

La plaque de maintien 40 comprend au moins un canal, dit canal de maintien 41. Ledit canal de maintien 41 comprend par exemple une entrée 414 et une sortie 416, ladite entrée 414 et ladite sortie 416 étant respectivement comprises dans la surface d'entrée 44 et la surface de sortie 46. Ledit canal de maintien 41 traverse la plaque de maintien 40 et s'étend longitudinalement, c'est-à-dire dans le sens de sa longueur, entre ladite entrée 414 et ladite sortie 416.

Ledit canal de maintien 41 est conçu pour être traversé au moins sur une partie de sa longueur par les fibres optiques 20. En d'autres termes, le canal de maintien 41 est conçu de sorte que l'entrée du canal de maintien 41 soit traversée par les fibres optiques 20. Autrement dit encore, ledit canal 41 est agencé de sorte qu'une partie de chacune des fibres optiques 20, ladite partie étant contigüe à son extrémité de sortie 26, se situe à l'intérieur du canal 41 de la plaque de maintien 40.

Ici, les fibres optiques 20 traversent entièrement le canal 41 de sorte que les extrémités de sortie 26 des fibres optiques 20 sont agencées au niveau de la sortie 416 du canal de maintien 41. En d'autres termes, la surface de sortie 46 de la plaque de maintien 40, le plan d'émission P et la surface d'entrée 34 de la plaque 30 de l'élément homogénéisant 3 sont ici sensiblement d'une part parallèles les uns aux autres et d'autre part confondus et/ou en contact les uns avec les autres.

Les fibres optiques 20 sont avantageusement fixées et/ou solidarisées à ladite plaque de maintien 40 notamment par soudage et/ou collage. On note que, notamment après solidarisation des fibres 20 à la plaque de maintien 40, les extrémités de sortie 26 des fibres optiques 20 pourront subir un polissage. Cette opération permet notamment de faciliter l'obtention du plan d'émission P.

Le canal de maintien 41 et le canal 31 de l'élément homogénéisant 3 sont agencés de manière à être positionnés l'un en face de l'autre. Avantageusement, ledit canal de maintien 41 possède une section transversale sensiblement identique à celle du canal 31 de la plaque de maintien 3, cela au moins au niveau du plan d'émission P. On note que le canal 31 de l'élément homogénéisant 3 et le canal de maintien 41 présentent chacun une direction d'extension longitudinale avantageusement confondue avec la direction principale de propagation de la lumière au niveau du plan d'émission P.

Avantageusement, l'élément homogénéisant 3 et l'élément de maintien 4 pourront être solidarisés l'un à l'autre notamment par vissage.

On note que ledit boitier 50 peut être un projecteur avant. Alternativement, ledit boitier 50 peut être un feu arrière ou encore une console pour un éclairage intérieur.

Enfin l'invention permet d'utiliser les dispositifs lumineux à DELs déjà existants. En effet les emplacements habituellement réservés aux DELs dans ce genre de dispositif peuvent être remplacés avantageusement par des trous débouchants sur les fibres optiques amenant la lumière issues de LED disposées ailleurs que sur ces emplacements. La hauteur et la section de ces trous seront adaptés en fonction des propriétés émittrices de la DELs qu'on souhaite remplacer. Avantageusement il n'est donc pas nécessaire de repenser toute la partie optique de projection et/ou l'optique de mise en forme pour adapter l'invention.

## Revendications

1. Dispositif lumineux, notamment pour véhicule automobile, comprenant :
- au moins un module optique,
- un guide de lumière (2) comportant au moins une face d'entrée destinée à coopérer avec une source lumineuse (1), et au moins une face de sortie apte à coopérer avec le module optique, pour conduire au moins une partie des rayons lumineux émis par la source lumineuse (1) vers le module optique, ledit module optique comprenant un élément homogénéisant (3) destiné à être traversé par les rayons lumineux issus de la sortie du guide de lumière (2) afin d'obtenir un faisceau homogène d'éclairage et/ou de signalisation.

2. Dispositif selon la revendication précédente, dans lequel l'élément homogénéisant (3) comprend une plaque (30).

3. Dispositif lumineux selon la revendication précédente, dans lequel la plaque (30) comprend une surface d'entrée (34) et une surface de sortie (36).

4. Dispositif lumineux selon la revendication précédente, dans lequel la face de sortie du guide de lumière (2) émet des rayons lumineux sous forme de cônes lumineux (5), la surface de sortie (36) de la plaque (30) étant agencée à proximité d'un plan d'intersection (P') desdits cônes de lumière (5).

5. Dispositif lumineux selon l'une quelconque des revendications 3 ou 4, dans lequel la face de sortie du guide de lumière (2) est agencée de manière sensiblement parallèle à la surface d'entrée (34) de la plaque (30).

6. Dispositif lumineux selon l'une quelconque des revendications 2 à 5, dans lequel ladite plaque (30) comprend au moins un canal (31) connectant la surface d'entrée (34) à la surface de sortie (36).

7. Dispositif lumineux selon la revendication précédente dans lequel le canal (31) comprend au moins une surface réfléchissante de manière à réfléchir les rayons lumineux sortant de la face de sortie du guide de lumière (2).

8. Dispositif lumineux selon la revendication précédente, dans lequel le canal est délimité par sa surface réfléchissante.

9. Dispositif lumineux selon l'une quelconque des revendications précédentes, dans lequel la face de sortie du guide de lumière (2) comprend des extrémités de sortie (26), lesdites extrémités de sortie (26) étant disposées de manière à être sensiblement confondues avec un même plan, dit plan d'émission (P).

10. Dispositif lumineux selon la revendication précédente, dans lequel les extrémités de sortie (26) du guide de lumière (2) ont été polies de manière à former ledit plan d'émission P.

11. Dispositif lumineux selon l'une quelconque, dans lequel les extrémités de sortie (26) du guide de lumière (2) débouchent sur le canal (31).

12. Dispositif lumineux selon l'une quelconque des revendications 6 à 11, dans lequel la face de sortie du guide de lumière (2) présente une section s'ajustant, en projection, dans ledit canal (31).

13. Dispositif lumineux selon l'une quelconque des revendications précédentes, comprenant en outre un élément de maintien (4), ledit élément de maintien (4) étant conçu pour maintenir le guide de lumière (2) relativement audit élément homogénéisant (3).

14. Dispositif lumineux selon la revendication précédente, dans lequel l'élément de maintien (4) comprend une plaque de maintien (40).

15. Dispositif lumineux selon l'une quelconque des revendications 13 ou 14, dans lequel l'élément de maintien (4) comprend au moins un canal (41) conçu pour accueillir le guide de lumière (2).

16. Dispositif lumineux selon l'une quelconque des revendications précédentes, comprenant au moins une source lumineuse (1).

17. Dispositif lumineux selon l'une quelconque des revendications précédentes, dans lequel la face d'entrée du guide de lumière (2) est en regard de la source lumineuse (1).

18. Dispositif lumineux selon la revendication précédente, dans lequel le guide de lumière (2) comprend au moins un toron de fibres optiques (20).

19. Dispositif lumineux selon l'une quelconque des revendications précédentes, dans lequel ledit dispositif lumineux comprenant un boitier fermé (50) par une glace (51), la source lumineuse (1) est logée dans ledit boitier (50).

20. Dispositif lumineux selon l'une quelconque des revendications 1 à 19, dans lequel ledit dispositif lumineux comprend un boitier (50) fermé par une glace (51), la source lumineuse (1) est située à l'extérieur dudit boitier (50).
